# EUROPÄISCHE PATENTSCHRIFT

(11) **EP 1 930 138 B1**
(45) Veröffentlichungstag und Bekanntmachung des Hinweises auf die Patenterteilung: **13.10.2010**
(21) Anmeldenummer: 07019075.6
(22) Anmeldetag: 27.09.2007
(51) Int. Cl.: B27D 1/00, B27K 3/16, B32B 21/04

(54) **Leichtbauplatte sowie Herstellungsverfahren**
Lightweight building slab and manufacturing method
Panneau de construction léger ainsi que son procédé de fabrication

(30) Priorität: 10.12.2006 DE 102006058445
(43) Veröffentlichungstag der Anmeldung: 11.06.2008
(73) Patentinhaber: Moralt Tischlerplatten GmbH & Co. KG, 83646 Bad Tölz (DE)
(72) Erfinder: Feile, Klaus, 83661 Lenggries (DE)
(74) Vertreter: Säger, Manfred

(56) Entgegenhaltungen:
- EP-A- 0 838 316
- EP-A- 1 452 286
- DE-A1- 19 746 701
- DE-U1- 20 108 858
- DE-U1- 29 919 919
- DE-U1-202004 005 479
- US-A- 4 741 971

## Beschreibung

Die Erfindung betrifft eine gattungsgemässe Leichtbauplatte gemäss dem Oberbegriff des Hauptanspruchs. Die Erfindung betrifft auch ein gattungsgemässes Verfahren zur Herstellung einer Leichtbauplatte gemäss dem Oberbegriff des VErfahrenshauptanspruchs.

Solche Leichtbauplatten sind an sich bekannt (DE 201 08 858 U1). Diese Leichtbauplatten haben sich zwar bewährt, sie sind aber nicht für alle Anwendungszwecke stabil genug. Es sind daher schon stabilere Leichtbauplatten entwickelt worden (DE 20 2004 005 479 U1). Der grundsätzliche Nachteil solcher Leichtbauplatten besteht darin, dass sie wegen ihrer geringen Dichte im allgemeinen leicht, zumindest aber je nach Ausgestaltung der Aussenschichten normal entflammbar sind.

Der Erfindung liegt daher die Aufgabe zugrunde, eine gattungsgemässe Leichtbauplatte sowie eine zu deren Herstellung diendendes gattungsgemässes Herstellungsverfahren für eine schwer entflammbare Leichtbauplatte vorzuschlagen.

Diese Aufgabe wird bei einer gattungsgemässe Leichtbauplatte bzw einem gattungsgemässen Herstellungsverfahren nach dem Oberbegriff des Hauptanspruchs erfindungsgemäss durch dessen jeweilige kennzeichnende Merkmale gelöst.

Nach Lehre der Erfindung wird also vor allem die Kernschicht vor ihrem Einbau einem gesonderten Verfahren, nämlich dem Imprägnieren mit Brandschutzsalzen unterzogen und erst dann zu der neuen schwer entflammbaren Leichtbauplatte weiterverarbeitet, wobei die den äusseren Abschluss der Leichtbauplatte bildende Aussenschicht beiderseits der Kernschicht ebenfalls mit Brandschutzsalzen imprägniert sein kann.

Es ist zwar bekannt, die an die Kernschicht aus Balsa angrenzenden Aussenschichten von jeweils mindestens drei miteinander verleimten, abgesperrten Holzlagen unter Verwendung eines feuerhemmenden Leims, insbesondere Phenolharzleims miteinander zu verleimen (DE 299 19 919 U1), wodurch eine feuerhemmende Wirkung durch Zugabe von anorganischen, nicht korrosiven Salze zur Leimflotte erzeugt werden soll. Alternativ wird auch vorgeschlagen, die Holzlagen geeignet zu behandeln.

Weitere zweckmässige Ausgestaltungen und Weiterbildungen der erfindungsgemässen Leichtbauplatte sind in den diesbezüglichen Unteransprüchen gekennzeichnet.

Um bei der Imprägnierung eine möglichst grosse Menge an Brandschutzsalzen in die Kernschicht hinein zu transportieren, hat es sich als überraschend vorteilhaft erwiesen, wenn die Kernschicht vor dem Imprägnieren zunächst einem Vakuum ausgesetzt wird. Dadurch tritt aus dem losen Gefüge der Kernschicht zunächst Luft unter Hinterlassung eines Unterdrucks aus. Wird dann die Kernschicht der Impränierlösung mit den Brandschutzsalzen und -nach einem weiteren zweckmässigen Schritt- der abgeschlossene Raum unter Beendigung des Vakuums dem Normal- unter oder einem Überdruck ausgesetzt, so bewirkt der in der Kernschicht hinterlassene Unterdruck, dass in diese die Impränierlösung aufgesogen wird, womit eine ausreichedene Menge an Brandschutzsalzen in die Kernschicht eingebracht werden kann.

Besonders effizient und für den taktweisen industriellen Einsatz geeignet wird das Herstellungsverfahren, wenn nicht nur die zumindest eine der beiden einander gegenüberliegenden, zueinander parallelen Stirnseiten der Kernschicht mit der Imprägnierlösung bedeckt wird, sondern darüberhinaus die beiden einander gegenüberliegenden, zueinander parallelen Stirnseiten der Kernschicht zwei voneinander getrennten, abgeschlossenen Räumen ausgesetzt werden und der eine Raum das Vakuum aufweist und der andere mit der Lösung von den vorzugsweise in Wasser gelösten Brandschutzsalzen so befüllt wird, dass die Imprägnierlösung an einer der beiden Stirnseiten anliegt. Auf diese Weise kann gewissermassen taktweise die Imprägnierlösung aufgrund des Vakkums auf der anderen Stirnseite von der einen Stirnseite der Kernschicht in deren Kapillaren kontinuierlich eingesaugt werden, bis die erforderliche Menge an Brandschutzsalzen eingebracht worden ist.

Weitere zweckmässige Ausgestaltungen und Weiterbildungen des erfindungsgemässen Herstellungsverfahrens der Leichtbauplatte sind in den betreffenden Unteransprüchen gekennzeichnet.

Nachfolgende Beispiele zeigen die Unterschiede bei den verschiedenenen Verfahren nach den Unteransprüchen:
Beispiel 1: Da Balsa trotz seiner sehr geringen Rohdichte sich nicht ohne weiteres tränken lässt, ist zum Imprägnieren Vakuum eingesetzt worden. Hierzu wurde ein Plastikzylinder mit zwei Ventilen verwendet, in den Kernschichten aus Balsa-Massivholz als Proben eingeschlossen wurden. An einem der beiden Ventile wird eine Vakuum-Pumpe angeschlossen, an dem anderen ein an einem Behälter mit der Imprägnierlösung angeschlossener Schlauch. Nach dem Einschalten der Vakuum-Pumpe dauert es bei geöffnetem ersten und geschlossenem zweiten Ventil fünf Minuten, bis der minimal mögliche Druck von 35 mbar als Vakuum erreicht wird. Dieses wird zehn Minuten aufrechterhalten. Danach wird das andere Ventil zum Einlassen der Imprägnierlösung geöffnet und der Plastikzylinder binnen vier Minuten geflutet. Unter Beibehaltung des Vakuums werde die Proben weitere 30 Minuten in der Imprägnierlösung gelassen, bis sich die Blasenbildung an der Holzoberfläche beruhigt hat.

Der gleiche Versuch wurde mit neuen Kernschichten aus Balsa- Massivholz als Proben wiederholt, jedoch nur mit zehn Minuten Einwirkzeit der Lösung nach dem Fluten. Nach Reklimatisierung der Proben wiesen jene des ersten Versuchs einen Salzgehalt von 14,0 Gew.% und die anderen von 13,8 Gew.% auf, was bedeutet, dass die Einwirkzeit für die Güte der Imprägnierung nicht entscheidend ist. Es wurden dabei 17 Gew.% erzielt.

Beispiel 2: Weiterhin wurde als weiteres Verfahren untersucht, wie sich ein Überdruck nach dem Anlegen des Vakuums auswirkt. Die Apparatur aus Beispiel 1 kann dafür nicht verwendet werden, da der Plastikzylinder keinen hohen Drücken standhalten kann. Folglich wurde ein großer Stahlkessel verwendet, in den man eine 100 Liter fassende Wanne schieben kann. In diese wurden nun Proben von Kernschichten gelegt und mit Bleigewichten beschwert. Der Deckel des Stahlkessels wurde Über 20 Muttern mit der Schlüsselweite 41 mm verschlossen.

Das sich anschliessende Verfahren gleicht in seinen Parametern exakt dem Beispiel 1, nur dass im Anschluss an das erzeugte Vakuum der Stahlkessel verschlossen bleibt und ein Überdruck von ca. 8,7 bar aufgebaut wird. Der angeschlossene Kompressor benötigt dafür etwa 13 Minuten. Dieser Überdruck wird nun für 30 Minuten aufrechterhalten. Nach dem Entlüften des Stahlkessels wird der Deckel geöffnet und die Proben entnommen.

Obwohl die Proben der Kernschichten bei dem Versuch nach diesem Beispiel 2 deutlich mehr Salzlösung aufnehmen als bei nur angelegtem Vakuum nach Beispiel 2 (Durchschnittswerte von 29,6 Gew.%, 26,4 Gew.% und 23,6 Gew.%), ist von dieser Variante des Herstellungsverfahrens mit so hohem Druck abzuraten, da dabei starke Verformungen im Balsaholz auftreten. Diese lassen auf eine Verringerung des Zellvolumens sowie eine Zerstörung der Zellstruktur schliessen.

Bei einem nachfolgende Versuch ist nachgewiesen worden, dass diese Verformung bei einem Überdruck von 4 bar nicht auftritt. Trotz einer Massenzunahme von 150 bis 250 Prozent durch die Brandschutzsalze sind alle Kernschichten während der Druckphase geschrumpft und haben sich stark in radialer, noch stärker aber in tangentialer Richtung verformt.

Generell kann man feststellen, dass sich die Verformung mit sinkender Rohdichte verstärkt. Die Deformation bleibt auch nach dem Reklimatisieren bei Raumtemperatur erhalten. Setzt man die Proben einer Temperatur im Bereich von 200 bis 240°C aus, so verformen sie sich Überraschenderweise allerdings wieder zurück, aber nur dann, wenn sie mit solchen, die Brandschutzsalze aufweisenden Imprägnierlösungen imprägniert waren, nicht aber bei solchen, die reinem Wasser ausgesetzt waren.

Nach der Analyse von Mikroschnitten, die sowohl von unbehandelten, nach Beispiel 1 (Vakuum) als auch nach Beispiel 2 (Vakuum und Druck) Proben angefertigt wurden, hat sich herausgestellt, dass die Zellwände und Gefässwände des Balsaholzes der Kernschicht bei den deformierten Proben kaum einmal zerstört sind, sondern meist lediglich verformt sind und somit Spannungen eingefroren haben. Daraus ist das Verhalten abzuleiten, dass diese Proben, sofern sie mit Brandschutzsalz behandelt sind, ihre Form nahezu zurückerhalten können.

Es hat sich als Ergenbnis der Versuche ferner ergeben, dass die Verteilung über die Dicke der Kernschicht bei Bespiel 1 (reines Vakuum) wesentlich homogener als bei Beispiel 2 (Vakuum und Druck) ist. Bei beiden Beispielen konnte aber nachgewiesen werden, dass die Imprägnierlösung bis zur Mitte der Kernschicht vorgedrungen ist.

Ein Ausführungsbeispiel für einer schwer entflammbaren Leichtbauplatte mit einer Stäbchenlage wird nachfolgend unter Bezugnahme auf die Zeichnung näher erläutert. In dieser zeigt:
- Figur 1: die Leichtbauplatte gemäss der Erfindung, in teilweise abgebrochener, perspektivischer Ansicht und

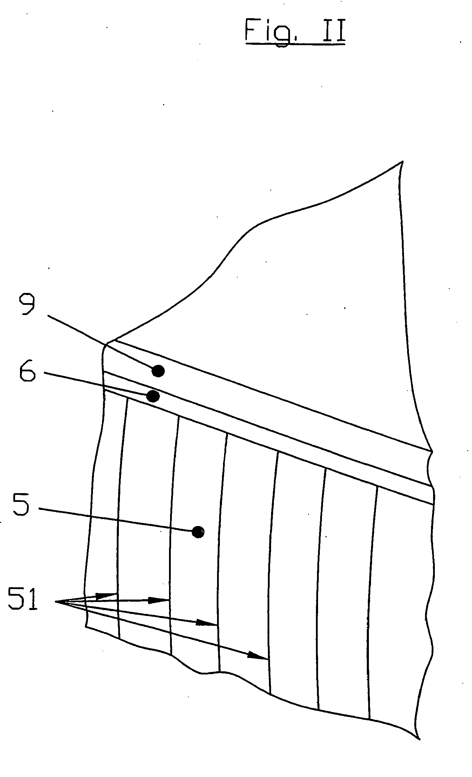

- Figur 2: die Einzelheit II-II gemäss Figur 1.

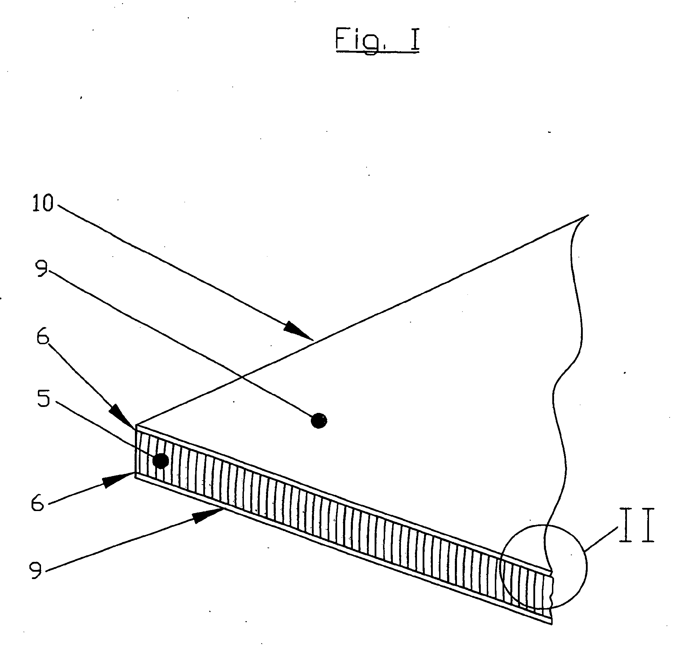

Die in Figur 1 gezeigte Leichtbauplatte 10 weist mit der Kernschicht 5 als Leichtholz eine massive Schicht eines Balsaholzes als Hirnholz auf, dessen Holzfasern beziehungsweise Kapillaren 51 im wesentlichen rechtwinklig zu den beiden zueinander parallelen Plattenebenen 6 der Kernschicht 5 verlaufen.

An die beiden Plattenebenen 6 der Kernschicht 5 schliessen sich nach aussen je eine damit verbundene und als im wesentlichen rechtwinklig zu und auf jeder Plattenebene 6 angeordnete Aussenschicht 9 an, die beim Ausführungsbeispiel aus je einer Furnierschicht gebildet sind.

Vor der Herstellung der schwer entflammbaren Leichtbauplatte 10 wird deren Kernschicht 5 aus einer mittleren Lage einer Massivholz aufweisenden Kernschicht 5 aus Hirnholz zuvor einem Verfahren unterzogen, bei dem eine Imprägnierung des Balsa mit Brandschutzsalzen erfolgt. Erst danach wird die neue und schwer entflammbare Leichtbauplatte 10 unter Verwendung der zuvor hergestellten imprägnierten Kernschicht 5 hergestellt.

## Patentansprüche

1. Leichtbauplatte (10) aus miteinander verbundenen, vorzugsweise verklebten Lagen aus Werkstoffen, insbesondere Möbel- oder Küchenplatte oder für den Einsatz in Luft-, Wasser- und Landfahrzeugen, mit einer mittleren Lage einer Massivholz aufweisenden Kernschicht (5) aus Hirnholz mit zwei im wesentlichen senkrecht zu deren Holzfasern beziehungsweise Kapillaren (51) sowie zueinander parallelen Plattenebenen (6) und mit zumindest je einer, den äusseren Abschluss der Leichtbauplatte (10) bildenden Aussenschicht (9) beiderseits der die Kernschicht (5) bildenden Lage, die aus einem Leichtholz mit einer Dichte von unter 250 kg/m³ besteht, und wobei das Massivholz der Kernschicht (5) Balsa ist, **dadurch gekennzeichnet, dass** die Kernschicht (5) mit Brandschutzsalzen imprägniert ist und dass die Brandschutzsalze, bezogen auf das Gewicht der Kernschicht (5) über 5 Gew.%, vorzugseise über 10 Gew.% und ganz besonders bevorzugt zwischen 15 Gew.% und 20 Gew.% aufweisen.

2. Platte nach Anspruch 1, **dadurch gekennzeichnet, dass** zumindest eine der beiden Aussenschichten (9) aus einem Holzwerkstoff besteht.

3. Platte nach Anspruch 2, **dadurch gekennzeichnet, dass** die Aussenschicht (9) eine Furnier- und/oder Sperrholzschicht ist.

4. Platte nach Anspruch 3, **dadurch gekennzeichnet, dass** die Fasern (91) der Furnierschicht (9) parallel zu der Plattenebene (6) verlaufen.

5. Platte nach einem der Ansprüche 1 bis 4, **dadurch gekennzeichnet, dass** die Werkstoffschichten mittels Harnstoffharz-Formaldehyd-Klebstoff (KUF) miteinander verklebt sind.

6. Platte nach einem der Ansprüche 1 bis 5, **dadurch gekennzeichnet, dass** die Aussenseite der Aussenschicht (9) mit einem weiteren Schichtstoff beschichtet ist.

7. Platte nach Anspruch 6, **dadurch gekennzeichnet, dass** als weiterer Schichtstoff HPL oder CPL verwendet wird.

8. Platte nach einem der Ansprüche 1 bis 7, **dadurch gekennzeichnet, dass** die Aussenschicht (9) als MDF-, HDF-, Spanplatten- oder Pappel-Sperrholzschicht ausgbildet ist.

9. Platte nach einem der Ansprüche 1 bis 8, **dadurch gekennzeichnet, dass** die Aussenschicht (9) mit Brandschutzsalzen imprägniert ist.

10. Platte nach Anspruch 9, **dadurch gekennzeichnet, dass** die Aussenschicht (9) mit Brandschutzsalzen so imprägniert ist, dass sie schwer entflammbar ist.

11. Platte nach einem der Ansprüche 1 bis 10, **dadurch gekennzeichnet, dass** die Brandschutzsalze Phosphor- und/oder Borsalze sind.

12. Verfahren zur Herstellung einer schwer entflammbaren Leichtbauplatte (10) aus miteinander verbundenen, vorzugsweise verklebten Lagen aus Werkstoffen, insbesondere Möbel- oder Küchenplatte oder für den Einsatz in Luft-, Wasser- und Landfahrzeugen, mit einer mittleren Lage einer Massivholz aufweisenden Kernschicht (5) aus Hirnholz mit zwei im wesentlichen senkrecht zu deren Holzfasern beziehungsweise Kapillaren (51) sowie zueinander parallelen Plattenebenen (6) und mit zumindest je einer, den äusseren Abschluss der Leichtbauplatte (10) bildenden Aussenschicht (9) beiderseits der die Kernschicht (5) bildenden Lage, die aus einem Leichtholz mit einer Dichte von unter 250 kg/m³ besteht, **dadurch gekennzeichnet, dass** als Massivholz der Kernschicht Balsa vorgesehen wird, dass diese Kernschicht (5) mit einer Lösung von vorzugsweise in Wasser gelösten Brandschutzsalzen imprägniert wird, dass die Kernschicht (5) vor dem Imprägnieren zunächst einem Vakuum ausgesetzt wird, dass zumindest eine der beiden einander gegenüberliegenden, zueinander parallelen Stirnseiten der Kernschicht mit der Imprägnierlösung bedeckt wird, dass der abgeschlossene Raum mit der Kernschicht (5) mit der Imprägnierlösung nach dem Impägnieren unter Normal- oder Überdruck gesetzt wird und dass danach die zumindest je eine, den äusseren Abschluss der Leichtbauplatte (10) bildende Aussenschicht (9) aufgebracht wird.

13. Verfahren nach Anspruch 12, **dadurch gekennzeichnet, dass** die Aussenschicht (9) durch Belegen oder durch Direktbeschichtung aufgebracht wird.

14. Verfahren nach Anspruch 12 oder 13, **dadurch gekennzeichnet, dass** das die Lösung vor dem Imprägnieren erwärmt wird.

15. Verfahren nach einem der Ansprüche 12 bis 14, **dadurch gekennzeichnet, dass** die beiden einander gegenüberliegenden, zueinander parallelen Stirnseiten der Kernschicht zwei voneinander getrennten, abgeschlossenen Räumen ausgesetzt sind, dass der eine Raum das Vakuum aufweist und dass der andere mit der Lösung von den vorzugsweise in Wasser gelösten Brandschutzsalzen so befüllt wird, dass die Lösung an einer der beiden Stirnseiten anliegt.

16. Verfahren nach Anspruch 15, **dadurch gekennzeichnet, dass** der eine, dem Vakuum ausgesetzte Raum unterhalb der Kernschicht (5) und dass die eine der beiden Stirnseiten der Kernschicht (5) in dem anderen Raum mit der Lösung bedeckt wird.

17. Verfahren nach Anspruch 16, **dadurch gekennzeichnet, dass** die Kernschicht (5) waagrecht angeordnet wird,

18. Verfahren nach einem der Ansprüche 12 und 15 bis 17, **dadurch gekennzeichnet, dass** nach Einwirken des Überdrucks und vor dem Belegen mit den Deckschichten die Kernschicht (5) einer Temperatur im Bereich von 200 bis 240°C ausgesetzt wird.

## Claims

1. A lightweight building panel (10) made of interconnected, preferably glued layers of materials, especially a furniture panel or kitchen panel or for use in aircraft, watercraft and land vehicles, with a middle layer of a core (5) comprising solid wood made of cross-grained wood with two panel planes (6) substantially perpendicular to its wood fibres or capillaries (51) and parallel to one another and, in each case, with at least one outer layer (9) forming the outer closure of the lightweight building panel (10) on both sides of the layer forming the core (5), which comprises a lightweight wood with a density of less than 250 kg/m³, and wherein the solid wood of the core (5) is balsa wood,
**characterised in that**
the core (5) is impregnated with fire-protection salts and that the fire-protection salts comprise, relative to the weight of the core (5), more than 5% by weight, preferably more than 10% by weight and by quite particular preference between 15% by weight and 20% by weight.

2. The panel according to claim 1,
**characterised in that**
at least one of the two outer layers (9) comprises a timber material.

3. The panel according to claim 2,
**characterised in that**
the outer layer (9) is a veneer and/or plywood layer.

4. The panel according to claim 3,
**characterised in that**
the fibres (91) of the veneer layer (9) extend parallel to the panel plane (6).

5. The panel according to any one of claims 1 to 4,
**characterised in that**
the material layers are glued to one another by means of urea-formaldehyde resin adhesive (UFRA).

6. The panel according to any one of claims 1 to 5,
**characterised in that**
the outer side of the outer layer (9) is coated with a further coating substance.

7. The panel according to claim 6,
**characterised in that**
HPL or CPL is used as the further coating substance.

8. The panel according to any one of claims 1 to 7,
**characterised in that**
the outer layer (9) is formed as an MDF, HDF, particle-board or paper-board plywood layer.

9. The panel according to any one of claims 1 to 8,
**characterised in that**
the outer layer (9) is impregnated with fire-protection salts.

10. The panel according to claim 9,
**characterised in that**
the outer layer (9) is impregnated with fire-protection salts in such a manner that it is hardly flammable.

11. The panel according to any one of claims 1 to 10,
**characterised in that**
the fire-protection salts are phosphorus and/or boron salts.

12. A method for manufacturing a hardly flammable lightweight building panel (10) from interconnected, preferably glued layers of materials, especially a furniture or kitchen panel or for use in aircraft, watercraft and land vehicles, with a middle layer of a core (5) comprising solid wood made of cross-grained wood with two panel planes (6) substantially perpendicular to its wood fibres or capillaries (51) and parallel to one another and, in each case, with at least one outer layer (9) forming the outer closure of the lightweight building panel (10) on both sides of the layer forming the core(5), which is made of a lightweight wood with a density of less than 250 kg/m³,
**characterised in that**
balsa wood is provided as the solid wood of the core,
that this core (5) is impregnated with a solution of fire-protection salts preferably dissolved in water,
that the core (5) is initially exposed to a vacuum before the impregnation,
that at least one of the two mutually opposing, mutually parallel surfaces of the core is covered with the impregnation solution,
that, after the impregnation with the impregnation solution, the enclosed space with the core (5) is set under normal pressure or positive pressure and that, following this, the at least one outer layer (9) is attached in each case forming the outer closure of the lightweight building panel (10).

13. The method according to claim 12,
**characterised in that**
the outer layer (9) is attached by surfacing or by direct coating.

14. The method according to claim 12 or 13,
**characterised in that**
the [??]the solution is heated before the impregnation.

15. The method according to any one of claims 12 to 14,
**characterised in that**
the two mutually opposing, mutually parallel surfaces of the core are exposed to two mutually separate enclosed spaces,
that the one space provides the vacuum and that the other is filled with the solution of the fire-prevention salts preferably dissolved in water in such a manner that the solution is in contact with one of the two surfaces.

16. The method according to claim 15,
**characterised in that**
the one space exposed to the vacuum [??] below the core (5) and
that the one of the two surfaces of the core (5) in the other space is covered with the solution.

17. The method according to claim 16,
**characterised in that**
the core (5) is disposed horizontally.

18. The method according to any one of claims 12 and 15 to 17,
**characterised in that**,
after the effect of the positive pressure and before the surfacing with the covering layers, the core (5) is exposed to a temperature within the range from 200 to 240°C.

## Revendications

1. Panneau de construction léger (10) formé par des couches de matériaux assemblées entre elles, de préférence collées, en particulier panneau pour meuble ou cuisine ou destiné à être utilisé dans des véhicules aériens, maritimes ou terrestres, avec une couche centrale formant une âme (5) en bois de bout, contenant du bois massif, avec deux plans de jonction (6), sensiblement perpendiculaires aux fibres de bois ou capillaires (51) de ladite couche centrale et parallèles entre eux, et avec au moins chacun une couche extérieure (9), qui forme la fermeture extérieure du panneau de construction léger (10) de part et d'autre de la couche formant l'âme (5), qui est réalisée en bois léger avec une densité inférieure à 250 kg/m³, et le bois massif de l'âme (5) étant du balsa, **caractérisé en ce que** l'âme (5) est imprégnée de sels ignifuges et **en ce que** les sels ignifuges représentent plus de 5 % en poids, de préférence plus de 10 % en poids et encore mieux entre 15 % en poids et 20 % en poids, par rapport au poids de l'âme (5).

2. Panneau selon la revendication 1, **caractérisé en ce qu'**au moins une des deux couches extérieures (9) est réalisée dans un matériau à base de bois.

3. Panneau selon la revendication 2, **caractérisé en ce que** la couche extérieure (9) est une couche en bois de placage et/ou une couche en contreplaqué.

4. Panneau selon la revendication 3, **caractérisé en ce que** les fibres (91) de la couche en bois de placage (9) sont orientées parallèlement aux plans de jonction (6).

5. Panneau selon l'une quelconque des revendications 1 à 4, **caractérisé en ce que** les couches de matériaux sont collées les unes aux autres au moyen d'une colle à base de résine urée-formaldéhyde.

6. Panneau selon l'une quelconque des revendications 1 à 5, **caractérisé en ce que** la face extérieure de la couche extérieure (9) est revêtue d'un stratifié supplémentaire.

7. Panneau selon la revendication 6, **caractérisé en ce que** le stratifié supplémentaire utilisé est le HPL ou CPL.

8. Panneau selon l'une quelconque des revendications 1 à 4, **caractérisé en ce que** la couche extérieure (9) est réalisée sous forme de panneau de fibres à densité moyenne, de panneau de fibres à haute densité, de panneau de particules ou de panneau de contreplaqué de peuplier.

9. Panneau selon l'une quelconque des revendications 1 à 8, **caractérisé en ce que** la couche extérieure (9) est imprégnée de sels ignifuges.

10. Panneau selon la revendication 9, **caractérisé en ce que** la couche extérieure (9) est imprégnée de sels ignifuges, de telle sorte qu'elle est difficilement inflammable.

11. Panneau selon l'une quelconque des revendications 1 à 10, **caractérisé en ce que** les sels ignifuges sont des sels ignifuges sont des sels de phosphore et/ou des sels de bore.

12. Procédé de réalisation d'un panneau de construction léger (10) difficilement inflammable, formé par des couches de matériaux assemblées entre elles, de préférence collées, en particulier panneau pour meuble ou cuisine ou destiné à être utilisé dans des véhicules aériens, maritimes et terrestres, avec une couche centrale formant une âme (5) en bois de bout, contenant du bois massif, avec deux plans de jonction (6), sensiblement perpendiculaires aux fibres de bois ou capillaires (51) de ladite couche centrale et parallèles entre eux, et avec au moins chacun une couche extérieure (9), qui forme la fermeture extérieure du panneau de construction léger (10) de part et d'autre de la couche formant l'âme (5), qui est réalisée en bois léger avec une densité inférieure à 250 kg/m³, **caractérisé en ce que** le balsa est prévu pour le bois massif de l'âme, **en ce que** ladite âme (5) est imprégnée d'une solution de sels ignifuges, de préférence dissous dans l'eau, **en ce que** l'âme (5), avant l'imprégnation, est d'abord exposée au vide, **en ce qu'**au moins une des deux faces frontales face à face et parallèles entre elles de l'âme est recouverte avec la solution d'imprégnation, **en ce que** le volume fermé avec l'âme (5) avec la solution d'imprégnation est exposé, après l'imprégnation, à une pression normale ou à une surpression, et **en ce qu'**à la suite de cela, au moins une couche extérieure (9) formant respectivement la fermeture extérieure du panneau de construction léger (10) est déposée.

13. Procédé selon la revendication 12, **caractérisé en ce que** la couche extérieure (9) est appliquée par dépôt ou par revêtement direct.

14. Procédé selon la revendication 12 ou 13, **caractérisé en ce que** la solution est chauffée avant l'imprégnation.

15. Procédé selon l'une quelconque des revendications 12 à 14, **caractérisé en ce que** les deux faces frontales face à face et parallèles entre elles de l'âme sont exposées à deux espaces fermés, séparés l'un de l'autre, **en ce que** l'un des espaces comporte le vide et **en ce que** l'autre espace est rempli de la solution de sels ignifuges, de préférence dissous dans l'eau, de telle sorte que la solution est en contact avec l'une des deux faces frontales.

16. Procédé selon la revendication 15, **caractérisé en ce que** l'espace exposé au vide se situe en dessous de l'âme (5) et **en ce que** l'une des deux faces frontales de l'âme (5) est revêtue de la solution dans l'autre espace.

17. Procédé selon la revendication 16, **caractérisé en ce que** l'âme (5) est disposée horizontalement.

18. Procédé selon les revendications 12 et 15 à 17, **caractérisé en ce qu'**après l'influence de la surpression et avant le dépôt des couches de protection, l'âme (5) est exposée à une température dans une plage de 200 à 240°C.
